# DEMANDE DE BREVET EUROPEEN

(11) **EP 2 767 510 A1**
(43) Date de publication de la demande: **20.08.2014**
(21) Numéro de dépôt: 14155463.4
(22) Date de dépôt: 17.02.2014
(51) Int. Cl.: C01B 31/02

(54) **Procédé de fonctionnalisation de nanotubes de carbone par un ou plusieurs composés organiques**

(30) Priorité: 18.02.2013 FR 1351360
(71) Demandeur: Commissariat à l'Énergie Atomique et aux Énergies Alternatives, 75015 Paris (FR); Centre National de la Recherche Scientifique, 75016 Paris (FR); Université Montpellier 2 Sciences et Techniques, 34095 Montpellier Cedex 05 (FR); Ecole Nationale Supérieure de Chimie de Montpellier, 34296 Montpellier Cedex 5 (FR)
(72) Inventeur: CAMBEDOUZOU, Julien, 30700 SAINT SIFFRET (FR); GRANDJEAN, Agnès, 30330 SAINT MARCEL DE CAREIRET (FR); KAPER, Helena, 30133 LES ANGLES (FR); NICOLLE, Jimmy, 69780 MIONS (FR)
(74) Mandataire: Ilgart, Jean-Christophe

(57) **Abrégé**

La présente invention a trait à un procédé de fonctionnalisation de nanotubes de carbone par des groupes fonctionnels organiques, lesdits groupes étant liés par covalence auxdits nanotubes de carbone *via* un composé organique, ledit procédé comprenant :
a) une étape de traitement sous ultrasons d'une composition comprenant des nanotubes de carbone non fonctionnalisés avec au moins un précurseur direct dudit composé organique comprenant lesdits groupes fonctionnels organiques, dans laquelle le ou lesdits précurseurs directs dudit composé organique comprenant lesdits groupes fonctionnels organiques sont un ou des composés comprenant lesdits groupes fonctionnels organiques ou des groupes précurseurs de ceux-ci et au moins un groupe apte à réagir avec les nanotubes de carbone pour former des liaisons covalentes *via* des réactions de Diels-Alder;
b) une étape de chauffage de la composition obtenue en a) à une température et une durée suffisantes pour engendrer lesdits nanotubes de carbone fonctionnalisés par covalence par lesdits groupes fonctionnels organiques *via* un composé organique tel que défini ci-dessus.

## Description

### DOMAINE TECHNIQUE

La présente invention a trait à un procédé de préparation de nanotubes de carbone fonctionnalisés par un ou plusieurs composés organiques, les nanotubes de carbone étant liés à le ou lesdits composés organiques par le biais de liaisons covalentes.

Les nanotubes de carbone ainsi fonctionnalisés vont apporter au domaine d'application auquel ils sont destinés, la fonction organique adaptée à l'application visée ainsi que les propriétés inhérentes aux nanotubes de carbone, à savoir l'inertie chimique (et notamment, la résistance dans des milieux très corrosifs, tels que des milieux basiques ou acides), les propriétés mécaniques et électroniques, telles que la résistance mécanique, la conductivité électrique.

Ces nanotubes peuvent trouver application dans de nombreux domaines, tels que :
- le domaine de la catalyse, dans lequel les nanotubes fonctionnalisés peuvent constituer des supports catalytiques ; et
- le domaine de l'extraction d'ions, tel que l'extraction d'ions en milieu corrosif.

### ÉTAT DE LA TECHNIQUE ANTÉRIEURE

Les procédés de synthèse de nanotubes de carbone fonctionnalisés ont fait l'objet de nombreuses mises en oeuvre dans l'art antérieur, et notamment concernant la fonctionnalisation par covalence. En effet, la fonctionnalisation par covalence est la fonctionnalisation la plus recherchée à l'heure actuelle notamment pour des applications de chimie séparative ou de catalyse, car elle assure une longue durée de vie aux nanotubes de carbone ainsi fonctionnalisés. A l'heure actuelle, la fonctionnalisation de nanotubes de carbone par des fonctions organiques implique la mise en oeuvre d'un procédé multi-étapes, et notamment une fonctionnalisation préalable des nanotubes de carbone par des espèces réactives, qui vont ensuite réagir avec le ou les composés appropriés pour former les fonctions organiques d'intérêt.

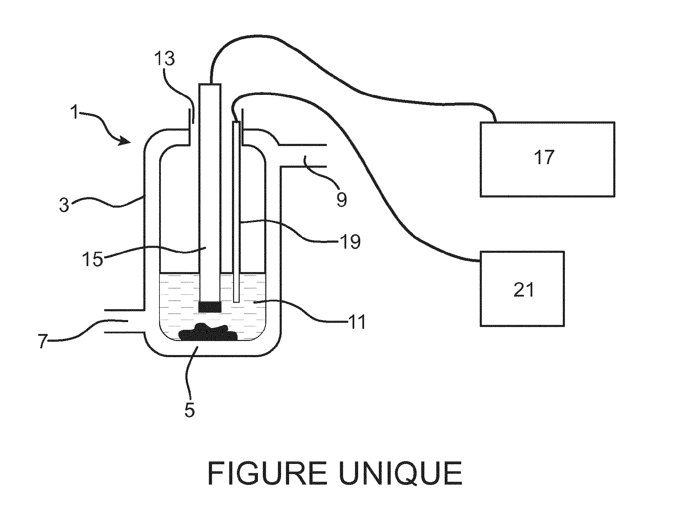

Ainsi, le document (Wong et al., Advanced Materials, 17 (2005) 17-29*)* décrit différents modes de fonctionnalisation parmi lesquels on peut citer :
- un mode impliquant une préfonctionnalisation de nanotubes de carbone par application d'un traitement oxydatif pour introduire des fonctions carboxyliques au niveau des extrémités ou des sites défectueux des nanotubes suivie d'une réaction desdites fonctions avec un réactif approprié pour former les fonctions organiques d'intérêt, telles que des fonctions esters, des fonctions amides, qui pourront être mises à profit pour complexer des ions métalliques (figure 2) ;
- un mode impliquant une préfonctionnalisation de nanotubes de carbone par fluorination de ces derniers, lesdits nanotubes ainsi fluorés pouvant ainsi réagir avec un large spectre de réactifs, dès lors que ces réactifs sont à même de réagir avec le fluor selon un mécanisme de substitution nucléophile (ce mode étant également décrit dans le document, Chem.Mater.Vol.20, n°8, 2008, 2685-2695).

Ainsi, il ressort de la plupart des modes de réalisation de l'art antérieur la nécessité de procéder à une préfonctionnalisation des nanotubes de carbone ou à tout le moins de procéder à des méthodes de synthèse complexes, la préfonctionnalisation pouvant engendrer une modification importante des propriétés des nanotubes, d'une part, et impliquant l'utilisation de conditions expérimentales agressives (notamment lorsqu'il s'agit de procéder à une fluorination préalable des nanotubes).

Au regard de ce qui existe, les Inventeurs se sont donc fixé pour objectif de proposer un nouveau procédé de fonctionnalisation de nanotubes de carbone par un ou plusieurs groupes organiques d'intérêt, qui ne nécessite pas de préfonctionnalisation des nanotubes de carbone et qui soit, qui plus est, simple, robuste et peu coûteux.

### EXPOSÉ DE L'INVENTION

Ainsi, l'invention a trait à un procédé de fonctionnalisation de nanotubes de carbone par des groupes fonctionnels organiques, lesdits groupes étant liés par covalence auxdits nanotubes de carbone *via* un composé organique, ledit procédé comprenant :
a) une étape de traitement sous ultrasons d'une composition comprenant des nanotubes de carbone non fonctionnalisés avec au moins un précurseur direct dudit composé organique comprenant lesdits groupes fonctionnels organiques, de préférence, dans laquelle le ou lesdits précurseurs directs dudit composé organique comprenant lesdits groupes fonctionnels organiques sont un ou des composés comprenant lesdits groupes fonctionnels organiques ou des groupes précurseurs de ceux-ci et au moins un groupe apte à réagir avec les nanotubes de carbone pour former des liaisons covalentes *via* des réactions de Diels-Alder; et
b) une étape de chauffage de la composition obtenue en a) à une température et une durée suffisantes pour engendrer lesdits nanotubes de carbone fonctionnalisés par covalence par lesdits groupes fonctionnels organiques *via* ledit composé organique tel que défini ci-dessus.

Avant d'entrer plus en avant dans la description, nous précisons les définitions suivantes.

Par nanotube de carbone, on entend, classiquement, un enroulement concentrique d'une ou plusieurs couches de graphène (c'est-à-dire un pavage d'hexagones de carbone). On parle de SWNT (correspondant à l'expression anglaise « Single Wall Nanotube ») lorsqu'il s'agit d'une seule couche de graphène et de MWNT (pour « Multi Wall Nanotube ») lorsqu'il s'agit de plusieurs couches de graphène.

Par précurseur direct d'un composé organique comprenant lesdits groupes fonctionnels organiques, on entend, classiquement, un composé qui, par réaction avec les nanotubes de carbone, pour former une liaison covalente, va donner après cette réaction ledit composé organique comportant lesdits groupes fonctionnels organiques, ledit composé comprenant les groupes fonctionnels organiques ne provenant ainsi pas de la réaction de plusieurs composés organiques mais étant issu de la réaction directe dudit précurseur avec les nanotubes.

Avant réaction, ledit précurseur peut comporter déjà lesdits groupes fonctionnels organiques. Dans le cas contraire, lesdits groupes fonctionnels organiques peuvent résulter de la réaction dudit précurseur avec les nanotubes pour former la liaison covalente.

Par fonctionnalisation par covalence, on entend que les groupes fonctionnels organiques sont liés aux nanotubes de carbone par le biais de liaisons covalentes via un composé organique, chaque liaison covalente résultant de la mise en commun de deux électrons, un électron provenant du nanotube de carbone et l'autre électron provenant du composé organique.

L'étape a) de mise en contact peut être précédée d'une étape de préparation de la composition en tant que telle, cette étape pouvant consister à mettre simplement en contact, éventuellement sous agitation, les nanotubes de carbone non fonctionnalisés et le ou les précurseurs directs dudit composé organique comprenant lesdits groupes fonctionnels organiques. Lorsque le ou les précurseurs se présentent sous forme liquide, il n'est pas nécessaire d'ajouter un solvant pour faciliter le mélange. Dans le cas contraire, l'ajout d'un solvant organique peut être utile, sous réserve, toutefois, que ce solvant organique soit inerte, c'est-à-dire qu'il ne doit pas réagir chimiquement, d'une part, avec le ou les précurseurs et, d'autre part, avec les nanotubes de carbone pour former une liaison covalente lors de la mise en oeuvre des étapes a) et b). Il s'entend également que le solvant organique, lorsqu'il est présent, ne devra pas réagir chimiquement avec le ou les groupes fonctionnels organiques présents à la surface des nanotubes de carbone à l'issue de l'étape a).

Comme mentionné ci-dessus, l'étape a) consiste à traiter, ou en d'autres termes, à soumettre la composition comprenant des nanotubes et un ou plusieurs précurseurs tels que définis ci-dessus à des ultrasons. Sans être lié par la théorie, ce traitement a pour visée d'individualiser les nanotubes initialement assemblés sous forme de fagots du fait des interactions attractives du type Van der Waals existant entre eux. Les nanotubes ainsi individualisés offrent une surface disponible beaucoup plus importante pour la réaction de fonctionnalisation. En outre, le traitement par ultrasons peut également créer des espèces radicalaires réactives au niveau des nanotubes et ainsi amorcer la fonctionnalisation.

Avantageusement, l'étape a) est réalisée, au moins lors du démarrage de l'étape, à une température inférieure à la température ambiante, par exemple inférieure à 20°C, par exemple, allant de 5 à 15°C et, en tout état de cause, ne doit, de préférence, pas dépasser 30°C, de sorte à ce que les espèces réactives ainsi créées ne réagissent pas notamment avec les groupes fonctionnels organiques ainsi liés.

Les nanotubes de carbone utilisés, dans le cadre de l'étape a), sont des nanotubes non fonctionnalisés, c'est-à-dire ne comportant pas, à leur surface, des groupes fonctionnels organiques, ces nanotubes de carbone pouvant être des nanotubes monofeuillets (ou SWNT) ou multifeuillets (ou MWNT).

Le ou les précurseurs directs dudit composé organique comportant des groupes fonctionnels organiques sont, de préférence, notamment un ou des composés comprenant lesdits groupes fonctionnels organiques ou des groupes précurseurs de ceux-ci et au moins un groupe apte à réagir avec les nanotubes pour former des liaisons covalentes, par exemple, via des réactions de Diels-Alder.

Par groupe précurseur desdits groupes fonctionnels organiques, on entend un groupe qui peut, par une réaction chimique simple, donner le groupe fonctionnel organique recherché.

A titre d'exemples de groupes aptes à réagir pour former une liaison covalente avec des nanotubes de carbone selon une réaction de Diels-Alder, on peut citer :
- les groupes diénophiles, tels que des groupes comportant au moins une liaison insaturée carbone-carbone, comme les groupes éthyléniques, les groupes acétyléniques ; et
- les groupes diènes conjugués (à savoir, des groupes comportant au moins deux doubles liaisons séparées par une liaison simple).

Selon le mécanisme classique des réactions de Diels-Alder, il s'entend que, lorsque les groupes aptes à réagir pour former une liaison covalente avec des nanotubes de carbone sont des groupes diénophiles, les nanotubes de carbone assureront la fonction de groupes diènes conjugués et *vice versa.*

A titre de groupes fonctionnels organiques, on peut citer des groupes amines, des groupes carboxylates, des groupes carboxyles, des groupes amides, des groupes phosphonates, des groupes phosphates, des groupes macrocycliques (tels que, par exemple, des groupes calixarènes).

A titre d'exemples de précurseur direct dudit composé organique comprenant lesdits groupes fonctionnels organiques, on peut citer :
- des composés acétyléniques porteurs d'au moins un groupe amine, tels que la propargylamine ;
- des composés acétyléniques porteurs d'au moins un groupe carboxylate, tels que l'éthynedicarboxylate de diméthyle ; et
- les mélanges de ceux-ci.

Concernant l'application des ultrasons, l'homme du métier choisira, avantageusement, la puissance et la fréquence appropriées pour désagréger les fagots formés par les nanotubes de carbone sans endommager la structure atomique de ces derniers, en vue de la réaction ultérieure de ceux-ci avec les précurseurs directs dudit composé organique comprenant lesdits groupes fonctionnels organiques.

A titre d'exemple, le traitement sous ultrasons peut consister à appliquer des ultrasons selon une puissance allant de 15 à 20 W pour une fréquence allant de 15 à 25 kHz, ce traitement pouvant être appliqué pendant une durée supérieure à 15 minutes.

Une fois l'étape a) mise en oeuvre, le procédé de l'invention comprend une étape b) de chauffage à une température et une durée suffisantes pour engendrer lesdits nanotubes de carbone fonctionnalisés par covalence par lesdits groupes fonctionnels organiques.

Le choix de la température et de la durée suffisantes peut être effectué par l'homme du métier par le biais d'essais expérimentaux préalables, jusqu'à trouver le couple approprié nécessaire pour obtenir lesdits nanotubes de carbone fonctionnalisés par covalence par les groupes fonctionnels choisis, l'obtention de tels nanotubes pouvant être contrôlée par des techniques d'analyse simples, telles que :
- la spectroscopie Raman, qui va permettre de mettre en évidence la présence de liaisons covalentes entre les composés organiques porteurs des groupes fonctionnels organiques et les nanotubes de carbone ;
- l'analyse thermogravimétrique, qui va permettre de déterminer la quantité de groupes fonctionnels organiques fonctionnalisant les nanotubes de carbone ;
- l'analyse chimique, qui va permettre de quantifier la teneur en groupes fonctionnels organiques.

Avantageusement, une température appropriée pour la mise en oeuvre de l'étape b) est une température inférieure à 150°C, par exemple, allant de 80°C à 150°C, et peut être appliquée pendant une durée pouvant aller de 20 à 50 heures, par exemple dans un dispositif du type autoclave.

L' étape a) peut être réalisée dans un dispositif apte à fournir des ondes ultrasonores en vue de la mise en oeuvre de l'étape a), tandis que l'étape b) peut être réalisée, dans un deuxième temps, dans un dispositif apte à assurer le chauffage de la dispersion, tel qu'un autoclave.

Dans ce cas, le procédé de l'invention comprend, avantageusement, entre l'étape a) et l'étape b), une étape intermédiaire de transfert de la dispersion obtenue en a) vers le réacteur apte à assurer son chauffage en vue de la mise en oeuvre de l'étape b).

Un tel dispositif peut être un dispositif conforme à celui représenté sur la figure 1 jointe en annexe selon une vue en coupe transversale.

Ce dispositif consiste en un réacteur 1 comportant une double enveloppe 3, dont l'espace 5 entre les deux enveloppes est alimenté par un fluide qui entre dans ledit espace au niveau d'une entrée 7 située au niveau de la partie inférieure du réacteur et qui est évacué dudit espace *via* une sortie 9. Le réacteur comprend une partie formant réservoir 11 délimitée par l'enveloppe intérieure, laquelle partie formant réservoir est destinée à accueillir la composition définie à l'étape a).

Cette partie formant réservoir est pourvue d'une ouverture 13 située au niveau de sa partie supérieure, cette ouverture permettant, outre le remplissage de la partie formant réservoir, l'introduction d'une sonde à ultrasons 15 reliée à un dispositif de commande 17, qui permet le contrôle de la puissance et la fréquence des ultrasons et éventuellement d'un thermocouple 19 relié à un dispositif de lecture 21, apte à détecter, par exemple, des températures s'échelonnant de 10 à 40°C, cette gamme de températures étant une gamme appropriée pour la mise en oeuvre de l'étape a).

A l'issue des étapes a) et b), le procédé de l'invention comprend, classiquement, une étape de filtration de la dispersion résultante, de sorte à isoler le solide constitué par les nanotubes de carbone fonctionnalisés. Ces nanotubes peuvent être ensuite lavés au moyen d'un solvant organique inerte vis-à-vis des fonctions greffées à la surface desdits nanotubes.

D'autres caractéristiques et avantages de l'invention apparaîtront du complément de description qui suit.

Bien entendu, ce complément de description n'est donné qu'à titre d'illustration de l'invention et n'en constitue en aucun cas une limitation.

### BRÈVE DESCRIPTION DES DESSINS

La figure unique représente une vue en coupe transversale d'un réacteur mis en oeuvre dans le cadre des exemples qui suivent.

### EXPOSÉ DÉTAILLÉ DE MODES DE RÉALISATION PARTICULIERS

### Exemple 1

10 mg de nanotubes de carbone monofeuillets (SWNT) sont dispersés dans 10 mL d'éthynedicarboxylate de diméthyle dans un réacteur double paroi de 20 mL tel que celui représenté sur la figure unique.

La solution résultante est alors mise sous ultrasons pendant 15 minutes, à une puissance de 18 W et une fréquence de 20 kHz. La température est initialement abaissée à 10°C et est contrôlée égale à 30°C au terme du traitement ultrasonore. Puis cette solution est transférée dans un autoclave en téflon pour être chauffée à 100°C sous pression autogène pendant 24 heures.

Après ce traitement, les nanotubes sont récupérés par filtration, lavage sous acétone, et séchage à l'air.

Les spectres Raman de ces nanotubes montrent d'une part que cette fonctionnalisation se fait par liaison covalente et d'autre part que les fonctions carboxylates sont réparties de façon homogène au sein du matériau.

### Exemple 2

10 mg de nanotubes de carbone monofeuillets (SWNT) sont dispersés dans 10 mL de propargylamine dans un réacteur double-paroi de 20 mL tel que celui représenté sur la figure unique.

Cette solution est alors mise sous ultrasons pendant 15 minutes, à une puissance de 18 W et une fréquence de 20 kHz. La température est initialement abaissée à 10°C et est contrôlée égale à 40°C au terme du traitement ultrasonore. Puis cette solution est transférée dans un autoclave en téflon pour être chauffée à 100°C sous pression autogène pendant 24 heures.

Après ce traitement, les nanotubes sont récupérés par filtration, lavage sous acétone, et séchage à l'air.

Les spectres Raman de ces nanotubes montrent d'une part que cette fonctionnalisation se fait par liaison covalente et d'autre part que les fonctions amines sont réparties de façon homogène au sein du matériau.

## Revendications

1. Procédé de fonctionnalisation de nanotubes de carbone par des groupes fonctionnels organiques, lesdits groupes étant liés par covalence auxdits nanotubes de carbone *via* un composé organique, ledit procédé comprenant :
a) une étape de traitement sous ultrasons d'une composition comprenant des nanotubes de carbone non fonctionnalisés avec au moins un précurseur direct dudit composé organique comprenant lesdits groupes fonctionnels organiques, dans laquelle le ou lesdits précurseurs directs dudit composé organique comprenant lesdits groupes fonctionnels organiques sont un ou des composés comprenant lesdits groupes fonctionnels organiques ou des groupes précurseurs de ceux-ci et au moins un groupe apte à réagir avec les nanotubes de carbone pour former des liaisons covalentes *via* des réactions de Diels-Alder;
b) une étape de chauffage de la composition obtenue en a) à une température et une durée suffisantes pour engendrer lesdits nanotubes de carbone fonctionnalisés par covalence par lesdits groupes fonctionnels organiques *via* un composé organique tel que défini ci-dessus.

2. Procédé de fonctionnalisation de nanotubes de carbone selon la revendication 1, comprenant, en outre, une étape de préparation de la composition telle que définie à la revendication 1.

3. Procédé de fonctionnalisation de nanotubes de carbone selon la revendication 1 ou 2, dans lequel, l'étape a) est réalisée à une température ne dépassant pas 30°C.

4. Procédé de fonctionnalisation de nanotubes de carbone selon l'une quelconque des revendications précédentes, dans lequel les nanotubes de carbone utilisés, dans le cadre de l'étape a), sont des nanotubes monofeuillets ou multifeuillets.

5. Procédé de fonctionnalisation de nanotubes de carbone selon l'une quelconque des revendications précédentes, dans lequel le groupe apte à réagir pour former une liaison covalente est un groupe choisi parmi :
- les groupes diénophiles ; et
- les groupes diènes conjugués.

6. Procédé de fonctionnalisation de nanotubes de carbone selon la revendication 5, dans lequel les groupes diénophiles sont des groupes comportant au moins une liaison insaturée carbone-carbone.

7. Procédé de fonctionnalisation de nanotubes de carbone selon la revendication 5 ou 6, dans lequel les groupes diénophiles sont choisis parmi les groupes éthyléniques, les groupes acétyléniques.

8. Procédé de fonctionnalisation de nanotubes de carbone selon l'une quelconque des revendications précédentes, dans lequel les groupes fonctionnels organiques sont choisis parmi les groupes carboxylates, les groupes carboxyles, les groupes amides, les groupes phosphonates, les groupes phosphates, les groupes macrocycliques.

9. Procédé de fonctionnalisation de nanotubes de carbone selon l'une quelconque des revendications précédentes, dans lequel le précurseur direct dudit composé organique comprenant lesdits groupes fonctionnels organiques est choisi parmi les composés acétyléniques porteurs d'au moins un groupe amine, les composés acétyléniques porteurs d'au moins un groupe carboxylate et les mélanges de ceux-ci.

10. Procédé de fonctionnalisation de nanotubes de carbone selon l'une quelconque des revendications précédentes, dans lequel l'étape a) consiste à appliquer des ultrasons selon une puissance allant de 15 à 20 W pour une fréquence allant de 15 à 25 kHz.

11. Procédé de fonctionnalisation de nanotubes de carbone selon l'une quelconque des revendications précédentes, dans lequel l'étape b) est mise en oeuvre à une température inférieure à 150°C pendant une durée allant de 20 à 50 heures.
